# EUROPÄISCHE PATENTSCHRIFT

(11) **EP 2 281 143 B1**
(45) Veröffentlichungstag und Bekanntmachung des Hinweises auf die Patenterteilung: **24.12.2014**
(21) Anmeldenummer: 09719740.4
(22) Anmeldetag: 13.03.2009
(51) Int. Cl.: F21S 8/06, G02B 6/00

(54) **LEUCHTE MIT GETRENNTEN LEUCHTMITTELN FÜR DIREKTBELEUCHTUNG UND INDIREKTBELEUCHTUNG**
LUMINAIRE HAVING SEPARATE LAMPS FOR DIRECT LIGHTING AND INDIRECT LIGHTING
LUMINAIRE COMPORTANT DES MOYENS D'ÉCLAIRAGE DISTINCTS, POUR ÉCLAIRAGE DIRECT ET ÉCLAIRAGE INDIRECT

(30) Priorität: 14.03.2008 DE 102008014317
(43) Veröffentlichungstag der Anmeldung: 09.02.2011
(73) Patentinhaber: Zumtobel Lighting GmbH, 6850 Dornbirn (AT)
(72) Erfinder: KELLER, Katherina, 88131 Lindau (DE); PETSCHULAT, Manfred, 6922 Wolfurt (AT)
(74) Vertreter: Thun, Clemens
(86) Internationale Anmeldenummer: PCT/EP2009/001843
(87) Internationale Veröffentlichungsnummer: WO 2009/112277

(56) Entgegenhaltungen:
- EP-A- 0 846 915
- DE-A1-102005 027 261

## Beschreibung

Die vorliegende Erfindung betrifft eine Leuchte, welche einen plattenförmigen Lichtleiter und erste Leuchtmittel, die an einer oder mehreren Schmalseiten des Lichtleiters angeordnet und dazu ausgebildet sind, Licht in den plattenförmigen Lichtleiter einzukoppeln, aufweist, wobei das in den Lichtleiter eingekoppelte Licht über eine Flachseite des Lichtleiters in einer ersten Abstrahlrichtung der Leuchte abgegeben wird.

Eine solche Leuchte ist aus der DE 197 55 658 A1 der Anmelderin bekannt und wird unter der Bezeichnung AERO-Waveguide-Leuchte vertrieben. Diese Leuchte ist allgemein sehr beliebt, da sie sich durch eine extrem flache Bauform auszeichnet und die Anforderungen moderner Bürosituationen erfüllt. Die Leuchte lässt sich frei im Raum anordnen und ermöglicht ein reflektionsfreies Arbeiten an stehenden oder stark geneigten Bildschirmen, da das abgestrahlte Licht homogen über die gesamte Flachseite des plattenförmigen Lichtleitelements abgegeben wird. Da kein direkter Einblick auf die Leuchtmittel von unten möglich ist, genügt die Leuchte auch höchsten ästhetischen Ansprüchen.

Eine ähnliche Leuchte ist beispielsweise auch in der EP 0846 915 A1 beschrieben. Diese weist eine Fluoreszenzlichtquelle auf, zur Erzeugung von Direktlicht mit Hilfe eines plattenförmigen Lichtleiters, sowie weitere Fluoreszenzlichtquellen, die mit Hilfe eines zugeordneten Reflektors Licht indirekt in den Raum abstrahlen.

Die in DE 197 55 658 A1 offenbarte Leuchte kann derart ausgestaltet sein, dass das Licht der Leuchtmittel teilweise als indirekte Beleuchtung nach oben abgestrahlt wird. Es ist ferner allgemein bekannt, dass Licht, welches über ein Lichtleitelement abgestrahlt wird, gegenüber unmittelbar abgestrahltem Licht eine geringere Intensität aufweist. Dementsprechend weist bei der hier bezeichneten Leuchte der nach oben abgestrahlte Indirektanteil des Lichts eine höhere Intensität auf als der nach unten über das Lichtleitelement abgestrahlte Anteil des Lichts. Dieses wird üblicherweise als Nachteil der Leuchte angesehen, da der Beleuchtungswirkungsgrad auf Grund der inneffizienten Direktkomponente sehr gering ist.

Eine weitere aus dem Stand der Technik bekannte Leuchte wird in DE 10 2005 005 454 A1 offenbart. Diese Leuchte weist Entladungslampen als erste Leuchtmittel auf, wobei das Licht der Entladungslampen in einen Hohllichtleiter eingekoppelt wird und von diesem in verschiedene Richtungen abgestrahlt wird. Ferner weist die Leuchte in einem bevorzugten Ausführungsbeispiel Leuchtdioden auf, die zur Erzeugung von Farbeffekten eingesetzt werden. Dabei wird das von dem Hohllichtleiter nach oben zur Indirektbeleuchtung abgestrahlte Licht mit dem Licht der Leuchtdioden vermischt.

Aufgabe der vorliegenden Erfindung ist es nunmehr, den im Zusammenhang mit der in DE 197 55 658 A1 offenbarten Leuchte genannten Nachteil zu überwinden und dabei die vorteilhaften Eigenschaften dieser Leuchte beizubehalten.

Diese Aufgabe wird durch eine Leuchte entsprechend dem Anspruch 1 gelöst. Vorteilhafte Weiterbildungen sind Gegenstand der Unteransprüche.

Erfindungsgemäß wird dementsprechend eine Leuchte vorgeschlagen, die einen plattenförmigen Lichtleiter und erste Leuchtmittel, die an einer oder mehreren Schmalseiten des Lichtleiters angeordnet und dazu ausgebildet sind, Licht in den plattenförmigen Lichtleiter einzukoppeln, aufweist, wobei das in den Lichtleiter eingekoppelte Licht über eine Flachseite des Lichtleiters in einer ersten Abstrahlrichtung der Leuchte abgegeben wird, die ersten Leuchtmittel durch mehrere Leuchtdioden gebildet sind, und die Leuchte ferner zweite Leuchtmittel sowie eine diesen zugeordnete Reflektoranordnung aufweist, über die das Licht der zweiten Leuchtmittel in eine zur ersten Abstrahlrichtung entgegengesetzte zweite Abstrahlrichtung abgegeben wird. Ferner ist erfindungsgemäß vorgesehen, dass an den Schmalseiten des plattenförmigen Lichtleiters, an denen das Licht der Leuchtdioden eingekoppelt wird, eine Struktur zum gleichmäßigen Einkoppeln des Lichts ausgebildet ist, wobei die Schmalseiten derart geformt sind, dass sie unmittelbar vor jeder Leuchtdiode jeweils eine pyramidenförmige Struktur mit einer nach innen gewölbten Spitze bilden.

Die erfindungsgemäße Leuchte zeichnet sich gegenüber den aus dem Stand der Technik bekannten Leuchten dadurch aus, dass die Effizienz der Direktbeleuchtung deutlich erhöht wurde. Es hat sich insbesondere herausgestellt, dass durch die Verwendung von Leuchtdioden zur Direktbeleuchtung über einen Lichtleiter der Beleuchtungswirkungsgrad der Direktkomponente entscheidend erhöht werden kann.

Weitere Vorteile der erfindungsgemäßen Leuchte sind die extrem flache Bauform sowie ein homogenes Lichtbild, da das Licht aufgrund der Einkoppelstruktur trotz der einzelnen, im Wesentlichen punktförmigen Lichtquellen gleichmäßig über die gesamte Flachseite des Lichtleiters abgestrahlt wird.

Bei der erfindungsgemäßen Leuchte handelt es sich vorzugsweise um eine an einer Decke befestigbare Pendelleuchte. Die Leuchte kann aber auch an einer Wand befestigt werden.

Vorzugsweise sind die Schmalseiten des plattenförmigen Lichtleiters in Bereichen der Einkoppelstruktur und die Flachseite sowie die gegenüberliegende Seite des Lichtleiters in Bereichen der Einkoppelstruktur reflektierend ausgebildet. Auf diese Weise werden Lichtstrahlen, die von den Leuchtdioden unter sehr steilen Winkeln abgestrahlt werden in den Lichtleiter zurückreflektiert.

Ferner können die Schmalseiten des plattenförmigen Lichtleiters von einem Reflektor übergriffen werden, wobei dieser Reflektor in Bereichen der Einkoppelstruktur Ausnehmungen aufweist, durch die die ersten Leuchtmittel in die Einkoppelstruktur hineinragen

Die zweiten Leuchtmittel weisen vorzugsweise mindestens eine Entladungslampe auf. Es ist aber auch denkbar, hier ein anderes Leuchtmittel zu wählen, etwa Glühbirnen oder Leuchtdioden. Das Licht der zweiten Leuchtmittel wird als indirekte Beleuchtung an der Oberseite der Leuchte abgestrahlt.

In einem bevorzugten Ausführungsbeispiel weisen die ersten Leuchtmittel mehrere Leuchtdioden in zumindest zwei unterschiedlichen Farben auf. Auf diese Weise lassen sich mit der Leuchte verschiedene Farbeffekte erzielen, insbesondere wird es somit ermöglicht, die Farbtemperatur des Direktlichts einzustellen. Alternativ ist es auch möglich, Leuchtdioden zu verwenden, die weißes Licht abgeben.

Eine größere Flexibilität lässt sich ferner erzielen, falls die beiden Leuchtmittel getrennt voneinander ansteuerbar sind, wobei Einstellungen wie Lichtmenge und Lichtfarbe für beide Leuchtmittel separat einstellbar sein können.

Um eine gleichmäßige Abstrahlung des Lichts zu erreichen, kann auf der der zur Lichtabgabe vorgesehene Flachseite des plattenförmigen Lichtleiters gegenüberliegenden Seite des plattenförmigen Lichtleiters eine Struktur aufgedruckt sein, an der das Licht gestreut wird. Es ist hierbei ferner von Vorteil, wenn die Abstände zwischen der Struktur zur der Mitte der Platte hin enger werden.

Vorzugsweise ist an der der zur Lichtabgabe vorgesehene Flachseite des plattenförmigen Lichtleiters gegenüberliegenden Seite des plattenförmigen Lichtleiters ein Reflektor angeordnet, der das aus dem Lichtleiter entgegengesetzt zur ersten Abstrahlrichtung austretende Licht zurück in den Lichtleiter hinein reflektiert, so dass es an der gewünschten Flachseite des Lichtleiters austritt.

In der ersten Abstrahlrichtung gesehen ist hinter dem plattenförmigen Lichtleiter vorzugsweise eine lichtdurchlässige Platte mit einer Entblendungsstruktur oder mit einem Diffusor angeordnet, wobei in der ersten Abstrahlrichtung gesehen hinter dieser Platte eine weitere, plane und lichtdurchlässige Abschlussplatte angeordnet sein kann. Durch die Entblendungsstruktur bzw. den Diffusor wird das von der Leuchte in der ersten Abstrahlrichtung abgegebene Licht entblendet. Dementsprechend eignet sich die Leuchte auch für den Einsatz in Räumen mit stark geneigten Displays. Unerwünschte Reflektionen auf den Displays werden vermieden und die Leuchte kann an einer beliebigen Stelle in dem Raum angeordnet werden.

Der plattenförmige Lichtleiter wird ferner in einem bevorzugten Ausführungsbeispiel von zumindest zwei gegenüberliegenden Trageelementen gehalten wird, wobei die Fassungen für die erste und die zweite Leuchtmittel in diesen Trageelementen angeordnet ist. Bei einer solchen Anordnung ist ein direkter Einblick auf die Leuchtmittel nicht möglich.

Nachfolgend soll die Erfindung anhand der beiliegenden Zeichnung näher erläutert werden. Es zeigen:
- Fig. 1: eine Querschnitt der erfindungsgemäßen Leuchte;
- Fig. 2: einen plattenförmigen Lichtleiter;
- Fig. 3: eine Leuchtdiode sowie die Struktur einer Seitenfläche eines plattenförmigen Lichtleiters;
- Fig. 4: einen schematischen Querschnitt durch den plattenförmigen Lichtleiter;
- Fig. 5: ein erstes Ausführungsbeispiel der erfindungsgemäßen Leuchte in perspektivischer Unteransicht;
- Fig. 6: die in Fig. 5 dargestellte Leuchte in perspektivischer Draufsicht;
- Fig. 7: eine erfindungsgemäße Leuchte in abgewandelter Ausgestaltung in perspektivischer Unteransicht;
- Fig. 8: die Leuchte nach Fig. 7 in perspektivischer Draufsicht;
- Fig. 9: eine Ansicht eines alternativen Lichtleiters von oben; und
- Fig. 10: einen Querschnitt durch den in Fig. 9 dargestellten Lichtleiter entlang der Verbindung AA.

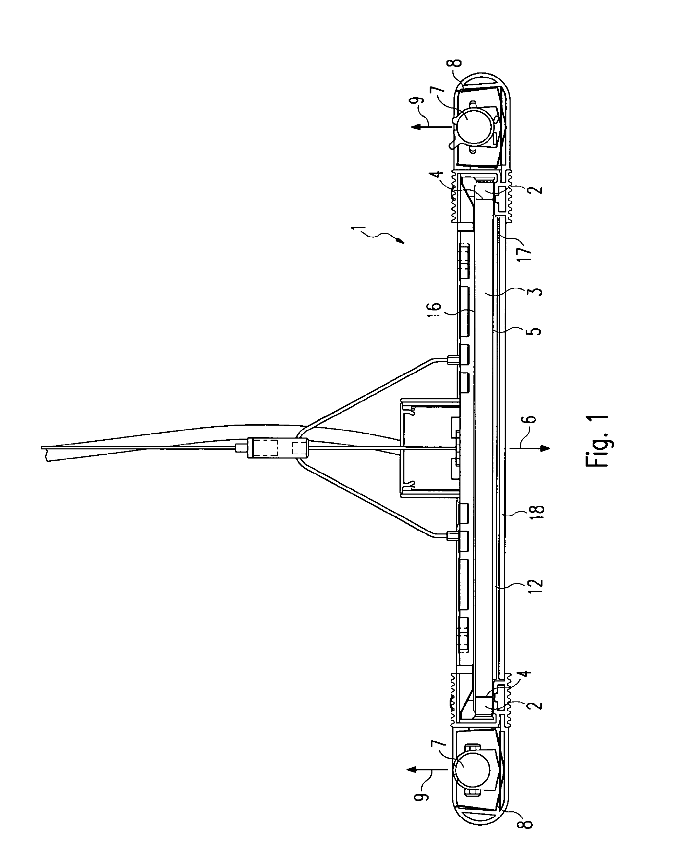

Die erfindungsgemäße Leuchte 1 ist in Fig. 1 in einem Querschnitt dargestellt. Diese Leuchte 1 weist erste Leuchtmittel auf, wobei es sich erfindungsgemäß um Leuchtdioden 2 handelt. Das Licht der Leuchtdioden 2 wird in einen plattenförmigen Lichtleiter 3 eingekoppelt. Die Einkoppelung des Lichts erfolgt an einer oder mehreren Schmalseiten 4 des plattenförmigen Lichtleiters 3. Ferner wird das Licht an einer der Flachseiten 5 des plattenförmigen Lichtleiters 3 abgestrahlt. Das Bezugszeichen 6 bezeichnet hier die Abstrahlrichtung für die von den ersten Leuchtmitteln erzeugte Direktbeleuchtung.

Der plattenförmige Lichtleiter 3 ist vorzugsweise aus glasklarem PMMA hergestellt. Es sind jedoch auch andere Materialien denkbar. Es könnte ferner ein plattenförmiger Hohllichtleiter verwendet werden.

Im Gegensatz zu den aus dem Stand der Technik bekannten Leuchten, weist die erfindungsgemäße Leuchte 1 ferner Fassungen für zweite Leuchtmittel 7 auf. In dem hier gezeigten Ausführungsbeispiel handelt es sich bei den zweiten Leuchtmitteln 7 um Entladungslampen. Es ist jedoch auch denkbar, ein anderes Leuchtmittel bei der erfindungsgemäßen Leuchte einzusetzen. Bei der Leuchte 1 wird das von den zweiten Leuchtmitteln 7 abgegebene Licht nach oben als Indirektbeleuchtung abgestrahlt. Zu diesem Zweck weist die Leuchte 1 ferner Reflektoranordnungen 8 auf, die den zweiten Leuchtmitteln 7 zugeordnet sind. Das Bezugszeichen 9 bezeichnet die Abstrahlrichtung für die nach oben angestrahlte Indirektbeleuchtung.

Durch die erfindungsgemäße Verwendung von zwei verschiedenen Leuchtmitteln 2 und 7 zur Erzeugung der Direktbeleuchtung 6 und der Indirektbeleuchtung 9 kann das Problem der im Stand der Technik bekannten Leuchte überwunden werden, dass bei nur einer gemeinsamen Lichtquelle die Intensität der Indirektbeleuchtung größer ist als die Intensität der über ein Lichtleitelement abgegebenen Direktbeleuchtung.

Bei der erfindungsgemäßen Leuchte 1 kann die Lichtstärke der Leuchtdioden 2 derart angepasst werden, dass die Intensität der Direktbeleuchtung 6 höher ist als die Intensität der Indirektbeleuchtung 9.

Es ist ferner möglich, über eine entsprechende Steuereinrichtung, die Leuchtdioden 2 und die zweiten Leuchtmittel 7 getrennt voneinander anzusteuern. Dabei können diese unabhängig voneinander eingeschaltet bzw. ausgeschaltet werden und es lassen sich vorzugsweise auch Einstellungen wie etwa Lichtfarbe, Farbtemperatur oder Lichtmenge für beide Leuchtmittel 2, 7 unabhängig voneinander regeln.

In einem bevorzugten Ausführungsbeispiel werden in der Leuchte 1 verschiedenfarbige Leuchtdioden 2 verwendet. In diesem Fall kann eine gewünschte Lichtfarbe der Direktbeleuchtung 6 besonders einfach eingeregelt werden. Alternativ ist es natürlich auch möglich, Leuchtdioden 2 einzusetzen, welche weißes Licht abstrahlen.

Wird der Indirektanteil 9 der Beleuchtung mit Entladungslampen erzeugt, so ist dabei eine Effizienz von knapp 100 lm/W bei hoher Intensität und Gleichmäßigkeit erreichbar. Der Direktanteil 6 der Beleuchtung wird erfindungsgemäß mit Leuchtdioden 2 erzeugt. Diese weisen eine maximal erreichbare Effizienz von etwa 50 lm/W auf. Vorzugsweise werden bei der erfindungsgemäßen Leuchte 1 eine oder mehrere der nachfolgend genannten Techniken eingesetzt, um die Effizienz der Leuchtdioden zu erhöhen.

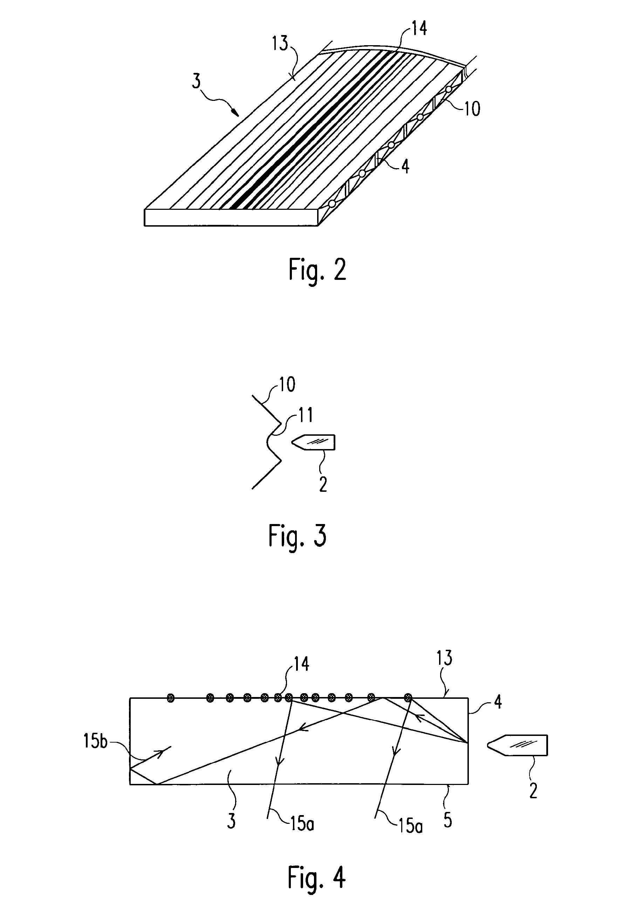

Vorzugsweise ist an den Schmalseiten 4 des plattenförmigen Lichtleiters 3, an denen das Licht der Leuchtdioden 2 eingekoppelt wird, eine Struktur zum gleichmäßigen und besonders effektiven Einkoppeln des Lichts angeordnet. Eine mögliche Struktur ist in den Figuren 2 und 3 dargestellt. Dabei bezeichnet das Bezugszeichen 10 die genannte Struktur.

Diese Struktur 10 ist hier derart ausgestaltet, dass die Schmalseiten 4 des plattenförmigen Lichtleiters 3, an denen das Licht der Leuchtdioden 2 eingekoppelt wird, derart geformt sind, dass sie unmittelbar vor jeder Leuchtdiode 2 jeweils eine pyramidenförmige Struktur 10 mit einer nach innen gewölbten Spitze 11 bilden. Es hat sich herausgestellt, dass bei einer Einkopplung von nahezu punktförmigem Licht diese Struktur 10 für eine gleichmäßige Verteilung des Lichts innerhalb des plattenförmigen Lichtleiters 3 sorgt. Diese Struktur 10 unterstützt ferner die Durchmischung der Einzellichtfarben bei dem Einsatz von verschiedenfarbigen Leuchtdioden 2.

Wie in Fig. 1 dargestellt, ist unterhalb des plattenförmigen Lichtleiters 3 eine weitere Platte 12 angeordnet. An der Unterseite dieser Platte 12 ist eine Entblendungsstruktur 17 oder ein Diffusor angeordnet, wobei in Fig. 1 die Entblendungsstrukur 17 nur andeutungsweise dargestellt ist. Dabei kann die Entblendungsstruktur 17 beispielsweise als Mikropyramidenstruktur ausgestaltet sein. Dadurch wird erreicht, dass das als Direktbeleuchtung 6 abgestrahlte Licht entblendet wird, d.h. es wird lediglich in einen bestimmten Winkelbereich abgegeben. Diese Eigenschaft ist insbesondere bei einem Einsatz der erfindungsgemäßen Leuchte 1 in einem Büro von Bedeutung, da dort üblicherweise senkrecht stehende oder stark geneigte Bildschirme zu finden sind und eine Blendwirkung vermieden werden sollte.

Unterhalb der Platte 12, welche die Entblendungsstruktur 17 btw. einen Diffusor aufweist, ist eine weitere, ebene, lichtdurchlässige Platte 18 angeordnet. Dabei handelt es sich um eine sogenannte Abschlussplatte 18. Sie dient dazu die Leuchte 1 vor Beschädigungen und Verschmutzungen zu schützen.

Der Einsatz der Platten 12 und 18 stellt eine vorteilhafte Weiterbildung der erfindungsgemäßen Leuchte dar. Es ist durchaus denkbar, auf eine oder beide Platten 12, 18 zu verzichten oder diese in einer vertauschten Reihenfolge anzubringen. Die Platte 12 könnte ferner derart ausgestaltet werden, dass sie besondere lichttechnische Effekte erzeugt, beispielsweise mittels eines Filters die Lichtfarbe verändert.

Auf der Oberseite des plattenförmigen Lichtleiters 3 ist ferner vorzugsweise ein Reflektor 16 angeordnet. Lichtstrahlen, die den Lichtleiter 3 nach oben verlassen werden von dem Reflektor 16 wieder in den Lichtleiter 3 zurückreflektiert, so dass nur über die Flachseite 5 von dem Lichtleiter 3 Licht abgestrahlt wird.

Die Flachseite 13 des plattenförmigen Lichtleiters 3, die nicht zur Abstrahlung der Direktbeleuchtung vorgesehen ist, ist mit einer Struktur 14 bedruckt. Wie in Fig. 2 dargestellt handelt es sich dabei um Längsstreifen. Im Innern des plattenförmigen Lichtleiters wird einmal eingekoppeltes Licht zumeist mittels Totalreflektion reflektiert. Trifft das Licht nun aber auf eine an der Flachseite 13 aufgedruckte Struktur 14, so wird es an dieser Struktur gestreut und kann an der gegenüberliegenden Flachseite 5 austreten.

Dieser Vorgang ist in Fig. 4 dargestellt. Fig. 4 zeigt einen Querschnitt durch einen plattenförmigen Lichtleiter 3 sowie eine Leuchtdiode 2, deren Licht in den Lichtleiter eingekoppelt wird. Der beispielhaft eingezeichnete Lichtstrahl 15b wird mehrfach an der Innenseite des Lichtleiters 3 totalreflektiert. Die Lichtstrahlen 15a treffen dagegen auf die aufgedruckte Struktur 14 an der Flachseite 13 des Lichtleiters 3 und werden an dieser gestreut. Durch die Streuung treffen diese Lichtstrahlen 15a nunmehr in einem so spitzen Winkel auf die Flachseite 5, dass es nicht zur Totalreflektion kommt, sondern die Strahlen 15a den Lichtleiter 3 verlassen.

Das Licht der Leuchtdiode 2 wird über die Schmalseite 4 eingekoppelt. Dementsprechend treffen mehr Lichtstrahlen an den Randbereichen der Flachseite 13 auf als im mittleren Bereich der Flachseite 13. Um dennoch eine gleichmäßige Abstrahlung zu gewährleisten, ist der Abstand zwischen den aufgedruckten Strukturelementen 14 in der Mitte der Flachseite 13 geringer.

Bei der in Fig. 1 gezeigten Leuchte 1 handelt es sich um eine Pendelleuchte, die an einer Decke befestigt wird. Die erfindungsgemäße Leuchte könnte aber auch in einem gewissen Abstand an einer Wand angebracht werden.

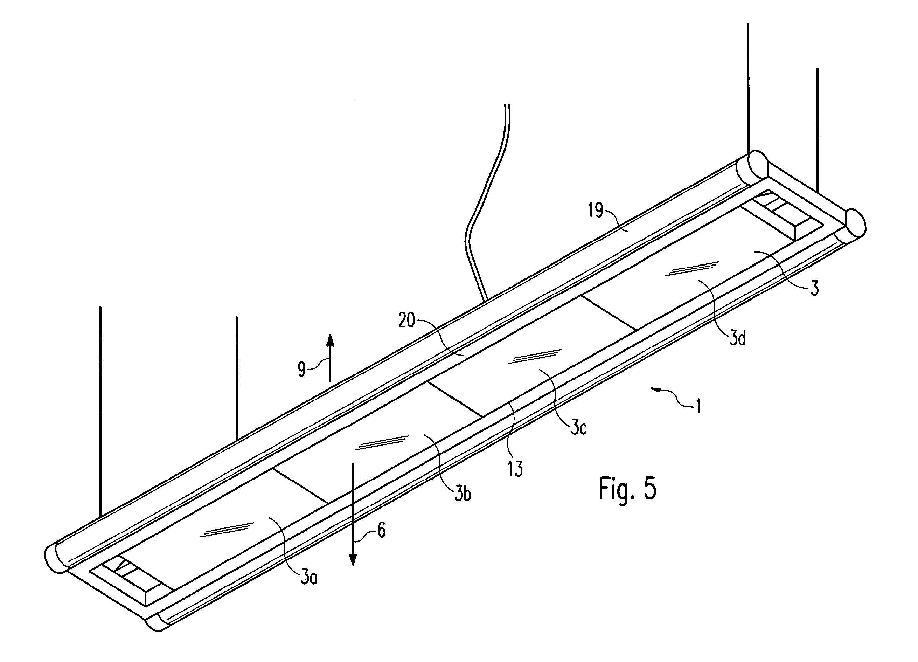

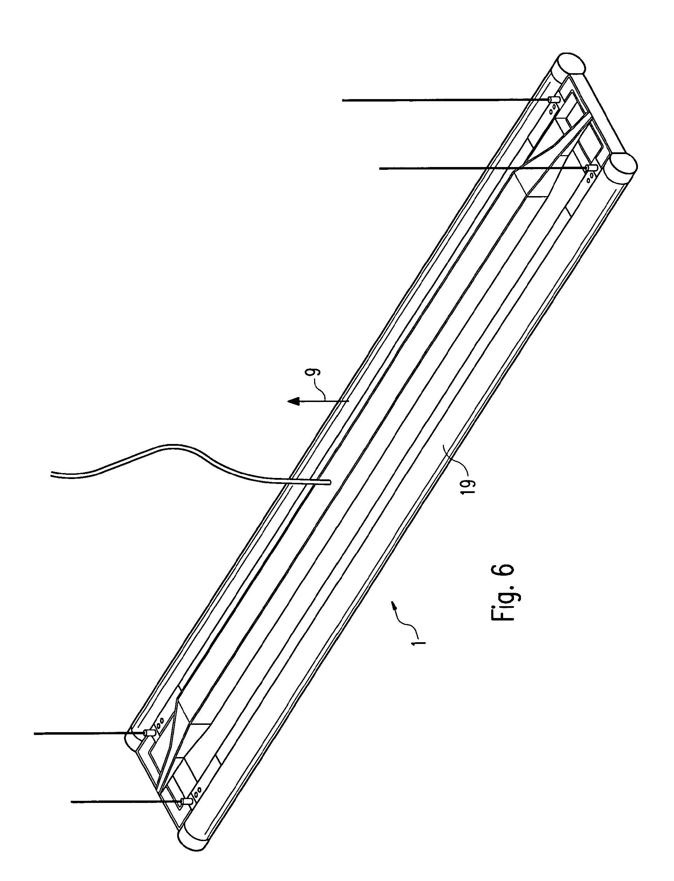

Die Fig. 5 und 6 zeigen weiter perspektivische Darstellungen des ersten Ausführungsbeispiels der erfindungsgemäßen Leuchte 1.

Fig. 5 ist eine perspektivische Darstellung der erfindungsgemäßen Leuchte von unten. Gleiche Bezugszeichen bezeichnen hierbei gleiche Elemente, die bereits im Zusammenhang mit den vorherigen Leuchten erläutert wurden.

Die in Fig. 5 dargestellte Leuchte weist einen plattenförmigen Lichtleiter 3 auf, der aus vier hintereinander angeordneten Lichtleiterplatten 3a, 3b, 3c, 3d zusammengesetzt ist.

An den Seiten des plattenförmigen Lichtleiters 3 ist ein Leuchtenträger 12 mit wenigstens zwei einander gegenüberliegenden Trageelementen 13 zur Halterung des Lichtleiters 3 angeordnet. Vorzugsweise sind der Leuchtenträger 12 und die Trageelemente 13 derart ausgestaltet, dass die Leuchtdioden 2 und die Fassungen für die zweiten Leuchtmittel 7 für einen unter der Leuchte 1 stehenden Betrachter nicht sichtbar sind. Die Bezugszeichen 6 und 9 bezeichnen wiederum die Direktbeleuchtung 6 bzw. die Indirektbeleuchtung 9.

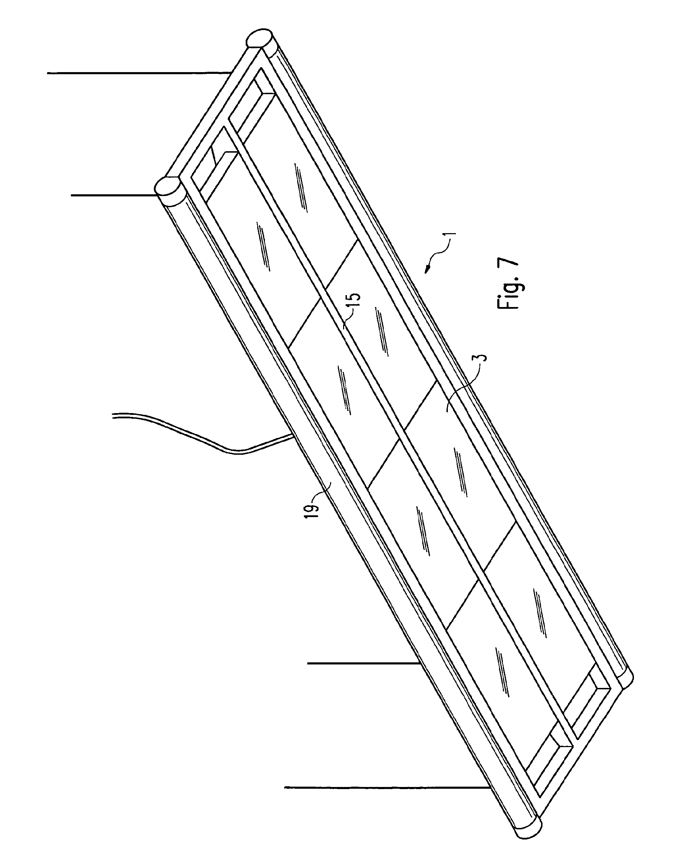

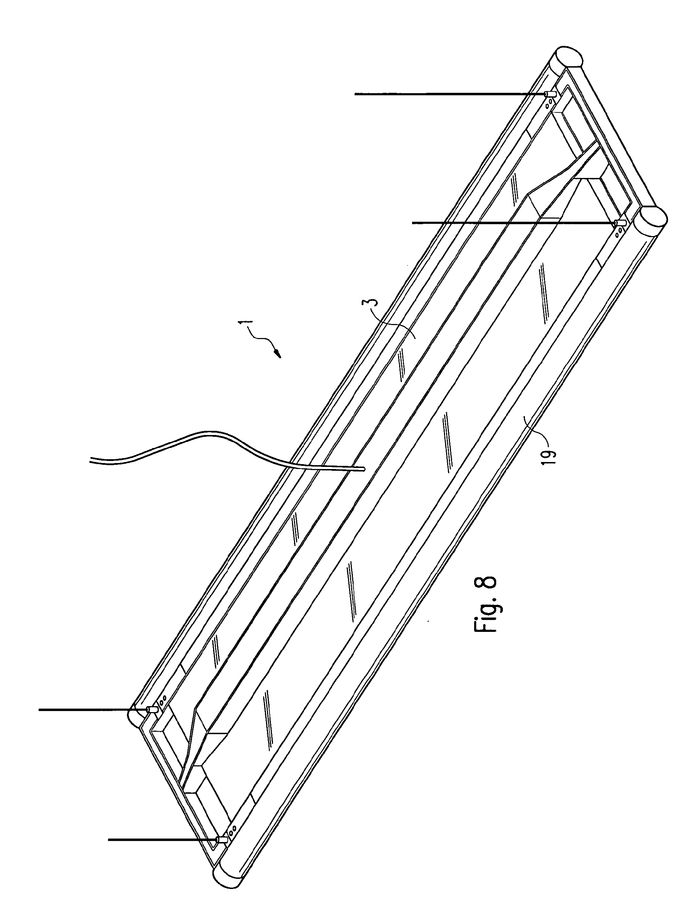

Fig. 7 und Fig. 8 zeigen ein alternatives Ausführungsbeispiel der erfindungsgemäßen Leuchte. Hier ist der plattenförmige Leuchtenträger 3 in Längsrichtung durch eine Längsbügel 15 unterteilt. Ansonsten stimmt diese Leuchte mit dem ersten Ausführungsbeispiel überein.

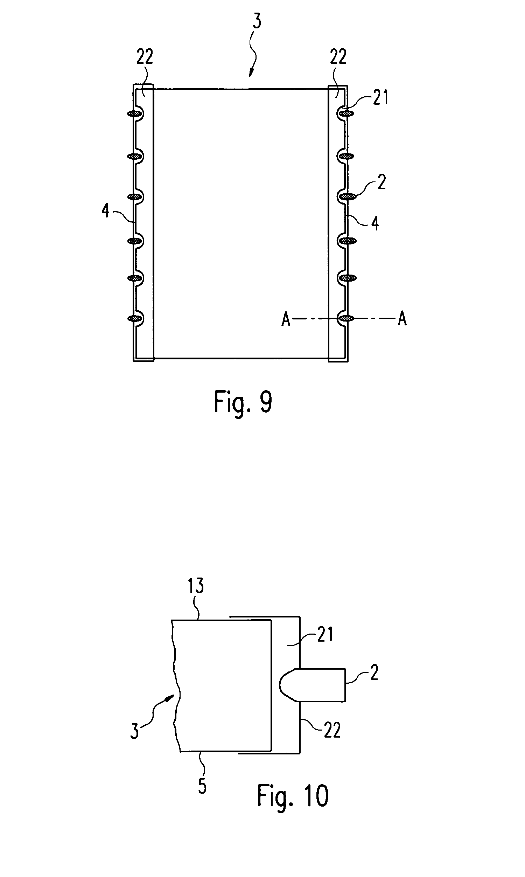

Fig. 9 und Fig. 10 zeigen eine weitere Möglichkeit zur Ausgestaltung der erfindungsgemäßen Leuchte. Fig. 9 zeigt einen plattenförmigen Lichtleiter 3 sowie Leuchtdioden 2 und einen noch zu diskutierenden Reflektor 22 in einer Ansicht von oben. Ferner zeigt Fig. 10 einen Schnitt durch den in Fig. 9 dargestellten Lichtleiter entlang der Linie AA.

Die Einkoppelstruktur 10 wird hier durch halbzylinderförmige Aussparungen 21 in den Schmalseiten 4 des plattenförmigen Lichtleiter 3 gebildet, wobei die Symmetrieachse des entsprechenden Zylinders senkrecht zur Flachseite 5 angeordnet ist. Die Leuchtdioden 2 ragen in die Aussparungen hinein.

Ferner ist die Schmalseite sowie der Randbereiche der Flachseite 5 und der gegenüberliegenden Flachseite 13 von einem U-förmigen Reflektor 22 umschlossen. Dieser U-förmige Reflektor 22 weist auf Höhe der Leuchtdioden 2 jeweils ein Loch auf, in das die entsprechende Leuchtdiode 2 eingeführt werden kann.

Der Reflektor 22 deckt die Randbereiche der Flachseiten 5, 13 ab und sorgt entsprechend dafür, dass Lichtstrahlen, die von der Leuchtdiode 2 unter sehr steilen Winkeln emittiert werden, den plattenförmigen Lichtleiter nicht unter diesem steilen Winkel verlassen, sondern vielmehr in den Lichtleiter zurück reflektiert werden.

Alternativ ist es ebenfalls möglich, den Reflektor 22 nicht als separates Bauteil auszugestalten, sondern vielmehr eine reflektierende Beschichtung auf die Schmalseiten 4 sowie die Randbereiche der Flachseiten 5, 13 des Lichtleiters auszubringen. Hierbei ist natürlich in gleicher Weise zu berücksichtigen, dass in der unmittelbaren Nähe der Leuchtdioden 2 keine reflektierende Beschichtung aufgebracht wird, da hier da Licht in den Lichtleiter 3 eingekoppelt wird.

Die Verwendung eines U-förmigen Reflektors 22 bzw. das Aufdampfen einer entsprechenden reflektierenden Schicht ist nicht nur bei einer Einkoppelstruktur 10, welche halbzylinderförmige Ausnehmungen der Schmalseiten 4 aufweist, sondern auch bei der weiter oben beschriebenen Einkoppelstruktur 10, bei der vor den Leuchtdioden 2 eine pyramidenförmige Struktur mit nach innen gewölbter Spitze 11 gebildet sind, sinnvoll. Auch hier ist darauf zu achten, dass der Reflektor 22 Ausnehmungen für die Leuchtdioden 2 aufweist bzw. dass in der unmittelbaren Nähe der Leuchtdioden 2 keine reflektierende Schicht aufgedampft wird.

Insgesamt zeichnet sich die erfindungsgemäße Leuchte 1 durch eine extrem flache Bauform aus, wobei das von den Leuchtdioden 2 erzeugte Licht als Direktbeleuchtung 6 über die Flachseite 5 des plattenförmigen Lichtleiters abgestrahlt wird. Ferner ist die Leuchte 1 erfindungsgemäß mit zweiten Leuchtmitteln 7 ausgestatten, die Licht als Indirektbeleuchtung 9 in eine andere Raumrichtung abstrahlen.

## Patentansprüche

1. Leuchte (1) aufweisend
• einen plattenförmigen Lichtleiter (3),
• erste Leuchtmittel, die an einer oder mehreren Schmalseiten (4) des Lichtleiters (3) angeordnet und dazu ausgebildet sind, Licht in den plattenförmigen Lichtleiter (3) einzukoppeln, wobei das in den Lichtleiter (3) eingekoppelte Licht über eine Flachseite (5) des Lichtleiters (3) in einer ersten Abstrahlrichtung der Leuchte (1) abgegeben wird, und
• zweite Leuchtmittel (7) sowie eine diesen zugeordnete Reflektoranordnung (8), über die das Licht der zweiten Leuchtmittel (7) in eine zur ersten Abstrahlrichtung entgegengesetzte zweite Abstrahlrichtung abgegeben wird,
**dadurch gekennzeichnet,**
**dass** die ersten Leuchtmittel durch mehrere Leuchtdioden (2) gebildet sind und dass an den Schmalseiten (4) des plattenförmigen Lichtleiters (3), an denen das Licht der Leuchtdioden (2) eingekoppelt wird, eine Struktur (10) zum gleichmäßigen Einkoppeln des Lichts ausgebildet ist, wobei die Schmalseiten (4) derart geformt sind, dass sie unmittelbar vor jeder Leuchtdiode (2) jeweils eine pyramidenförmige Struktur (10) mit einer nach innen gewölbten Spitze (11) bilden.

2. Leuchte (1) nach Anspruch 1,
**dadurch gekennzeichnet,**
**dass** es sich bei der Leuchte (1) um eine an einer Decke befestigbare Pendelleuchte handelt.

3. Leuchte (1) nach einem der vorherigen Ansprüche,
**dadurch gekennzeichnet,**
**dass** die ersten Leuchtmittel mehrere Leuchtdioden (2) in zumindest zwei unterschiedlichen Farben aufweisen.

4. Leuchte (1) nach einem der Ansprüche 1 oder 2,
**dadurch gekennzeichnet,**
**dass** die ersten Leuchtmittel Leuchtdioden (2), die weißes Licht abgeben, aufweisen.

5. Leuchte (1) nach einem der vorherigen Ansprüche,
**dadurch gekennzeichnet,**
**dass** die Schmalseiten (4) des plattenförmigen Lichtleiters (3) in Bereichen der Einkoppelstruktur (10) und die Flachseite (5) sowie die gegenüberliegende Seite (13) des Lichtleiters in Bereichen der Einkoppelstruktur (10) reflektierend ausgebildet sind.

6. Leuchte (1) nach einem der vorherigen Ansprüche,
**dadurch gekennzeichnet,**
**dass** die Schmalseiten (4) des plattenförmigen Lichtleiters (3) von einem Reflektor (22) übergriffen sind, wobei dieser Reflektor (22) in Bereichen der Einkoppelstruktur (10) Ausnehmungen aufweist, durch die die ersten Leuchtmittel in die Einkoppelstruktur hineinragen.

7. Leuchte (1) nach einem der vorherigen Ansprüche,
**dadurch gekennzeichnet,**
**dass** die zweiten Leuchtmittel (7) mindestens eine Entladungslampe aufweisen.

8. Leuchte (1) nach einem der vorherigen Ansprüche,
**dadurch gekennzeichnet,**
**dass** die beiden Leuchtmittel (2, 7) getrennt voneinander ansteuerbar sind, wobei Einstellungen wie Lichtmenge und Lichtfarbe für beide Leuchtmittel (2, 7) separat einstellbar sind.

9. Leuchte (1) nach einem der vorherigen Ansprüche,
**dadurch gekennzeichnet,**
**dass** die der zur Lichtabgabe vorgesehenen Flachseite (5) des plattenförmigen Lichtleiters (3) gegenüberliegende Seite (13) des plattenförmigen Lichtleiters (3) eine lichtstreuende Struktur (14) aufweist.

10. Leuchte (1) nach einem der vorherigen Ansprüche,
**dadurch gekennzeichnet,**
**dass** an der der zur Lichtabgabe vorgesehenen Flachseite (5) des plattenförmigen Lichtleiters (3) gegenüberliegenden Seite (13) des Lichtleiters (3) ein Reflektor (16) angeordnet ist.

11. Leuchte (1) nach einem der vorherigen Ansprüche,
**dadurch gekennzeichnet,**
**dass** in der ersten Abstrahlrichtung hinter dem plattenförmigen Lichtleiter (3) eine lichtdurchlässige Platte (12) mit einer Entblendungsstruktur (17) oder mit einem Diffusor angeordnet ist.

12. Leuchte (1) nach Anspruch 10,
**dadurch gekennzeichnet,**
**dass** in der ersten Abstrahlrichtung hinter der lichtdurchlässigen Platte (12) mit Entblendungsstruktur (17) oder mit einem Diffusor eine plane und lichtdurchlässige Abschlussplatte (18) angeordnet ist.

13. Leuchte (1) nach einem der vorherigen Ansprüche,
**dadurch gekennzeichnet,**
**dass** der plattenförmige Lichtleiter (3) von zumindest zwei gegenüberliegenden Trageelementen (20) gehalten wird, wobei die Leuchtdioden (2) und die Fassungen für die zweiten Leuchtmittel (7) in diesen Trageelementen (20) angeordnet sind.

## Claims

1. A luminaire (1), having
• a plate-shaped optical waveguide (3),
• first illuminants, arranged on one or more narrow sides (4) of the optical waveguide (3) and designed to couple light into the plate-shaped optical waveguide (3), the light coupled into the optical waveguide (3) being emitted via a flat side (5) of the optical waveguide (3) in a first radiating direction of the luminaire (1), and
• second illuminants (7) and a reflector arrangement (8) which is associated with them and via which the light of the second illuminants (7) is emitted in a second radiating direction which is opposite to the first radiating direction,
**characterized in that**
the first illuminants are formed by multiple LEDs (2), and at the narrow sides (4) of the plate-shaped optical waveguide (3), to which the light of the LEDs (2) is coupled, a structure (10) for coupling the light in evenly is formed, wherein the narrow sides (4) are in such a form that they each form, directly in front of each LED (2), a pyramid-shaped structure (10) with an inwardly curved peak (11).

2. A luminaire (1) according to claim 1,
**characterized in that**
the luminaire (1) is a pendant luminaire which can be fixed to a ceiling.

3. A luminaire (1) according to one of the preceding claims,
**characterized in that**
the first illuminants have multiple LEDs (2) in at least two different colours.

4. A luminaire (1) according to one of claims 1 or 2,
**characterized in that**
the first illuminants have LEDs (2) which emit white light.

5. A luminaire (1) according to one of the preceding claims,
**characterized in that**
the narrow sides (4) of the plate-shaped optical waveguide (3) in regions of the coupling-in structure (10) and the flat side (5) and the opposite side (13) of the optical waveguide in regions of the coupling-in structure (10) are in reflecting form.

6. A luminaire (1) according to one of the preceding claims,
**characterized in that**
the narrow sides (4) of the plate-shaped optical waveguide (3) are overlapped by a reflector (22), wherein this reflector (22) in regions of the coupling-in structure (10) has recesses, through which the first illuminants extend into the coupling-in structure.

7. A luminaire (1) according to one of the preceding claims,
**characterized in that**
the second illuminants (7) have at least one discharge lamp.

8. A luminaire (1) according to one of the preceding claims,
**characterized in that**
the two illuminants (2, 7) can be activated separately from each other, it being possible to set settings such as light quantity and light colour for both illuminants (2, 7) separately.

9. A luminaire (1) according to one of the preceding claims,
**characterized in that**
the side (13) of the plate-shaped optical waveguide (3) opposite the flat side (5) of the plate-shaped optical waveguide (3) that is intended to emit light has a light-scattering structure (14).

10. A luminaire (1) according to one of the preceding claims,
**characterized in that**
arranged on the side (13) of the optical waveguide (3) opposite the flat side (5) of the plate-shaped optical waveguide (3) that is intended to emit light there is a reflector (16).

11. A luminaire (1) according to one of the preceding claims,
**characterized in that**
arranged in the first radiating direction, behind the plate-shaped optical waveguide (3), there is a translucent plate (12) with an anti-glare structure (17) or diffuser.

12. A luminaire (1) according to claim 10,
**characterized in that**
arranged in the first radiating direction, behind the translucent plate (12) with an anti-glare structure (17) or diffuser, there is a plane, translucent closing plate (18).

13. A luminaire (1) according to one of the preceding claims,
**characterized in that**
the plate-shaped optical waveguide (3) is held by at least two opposite supporting members (20), the LEDs (2) and the holders for the second illuminants (7) being arranged in these supporting members (20).

## Revendications

1. Luminaire (1) présentant
- un guide de lumière (3) présentant une forme de panneau,
- des premiers moyens d'éclairage, qui sont disposés sur une ou de plusieurs tranches (4) du guide de lumière (3) et qui sont réalisés pour injecter de la lumière dans le guide de lumière (3) présentant une forme de panneau, sachant la lumière injectée dans le guide de lumière (3) est émise dans une première direction d'émission du luminaire (1) par l'intermédiaire d'un côté plat (5) du guide de lumière (3), et
- des deuxièmes moyens d'éclairage (7) ainsi qu'un ensemble réflecteur (8) associé à ces derniers, par l'intermédiaire duquel la lumière des deuxièmes moyens d'éclairage (7) est émise dans une deuxième direction d'émission opposée à la première direction d'émission,
**caractérisé en ce**
**que** les premiers moyens d'éclairage sont formés par plusieurs diodes électroluminescentes (2),
et en ce qu'une structure (10) servant à injecter de manière homogène de la lumière est réalisée au niveau des tranches (4) du guide de lumière (3) présentant une forme de panneau, au niveau desquelles est injectée la lumière des diodes électroluminescentes (2), sachant que les tranches (4) sont formées de telle manière qu'elles forment, directement devant chaque diode électroluminescente (2), respectivement une structure (10) présentant une forme pyramidale et pourvue d'une pointe (11) incurvée vers l'intérieur.

2. Luminaire (1) selon la revendication 1,
**caractérisé en ce**
**que** le luminaire (1) est une suspension pouvant être fixée au niveau d'un plafond.

3. Luminaire (1) selon l'une quelconque des revendications précédentes,
**caractérisé en ce**
**que** les premiers moyens d'éclairage présentent plusieurs diodes électroluminescentes (2) en au moins deux différentes couleurs.

4. Luminaire (1) selon l'une quelconque des revendications précédentes 1 ou 2,
**caractérisé en ce**
**que** les premiers moyens d'éclairage présentent des diodes électroluminescentes (2) qui émettent une lumière blanche.

5. Luminaire (1) selon l'une quelconque des revendications précédentes,
**caractérisé en ce**
**que** les tranches (4) du guide de lumière (3) présentant une forme de panneau sont réalisées de manière réfléchissante dans des zones de la structure d'injection (10) et le côté plat (5) ainsi que le côté opposé (13) du guide de lumière sont réalisés de manière réfléchissante dans des zones de la structure d'injection (10).

6. Luminaire (1) selon l'une quelconque des revendications précédentes,
**caractérisé en ce**
**que** les tranches (4) du guide de lumière (3) présentant une forme de panneau sont chevauchées par un réflecteur (22), sachant que ledit réflecteur (22) présente dans des zones de la structure d'injection (10) des évidements, par lesquels les premiers moyens d'éclairage dépassent dans la structure d'injection.

7. Luminaire (1) selon l'une quelconque des revendications précédentes,
**caractérisé en ce**
**que** les deuxièmes moyens d'éclairage (7) présentent au moins une lampe à décharge.

8. Luminaire (1) selon l'une quelconque des revendications précédentes,
**caractérisé en ce**
**que** les deux moyens d'éclairage (2, 7) peuvent être commandés séparément l'un de l'autre, sachant que des réglages tels que la quantité de lumière et la couleur de la lumière peuvent être réglés séparément pour les deux moyens d'éclairage (2, 7).

9. Luminaire (1) selon l'une quelconque des revendications précédentes,
**caractérisé en ce**
**que** le côté opposé (13) au côté plat (5), servant à l'émission de lumière, du guide de lumière (3) présentant une forme de panneau, du guide de lumière (3) présentant une forme de panneau présente une structure (14) à diffusion de lumière.

10. Luminaire (1) selon l'une quelconque des revendications précédentes,
**caractérisé en ce**
**qu'**un réflecteur (16) est disposé sur le côté (13) opposé au côté plat (5), servant à l'émission de lumière, du guide de lumière (3) présentant une forme de panneau, du guide de lumière (3).

11. Luminaire (1) selon l'une quelconque des revendications précédentes,
**caractérisé en ce**
**qu'**un panneau (12) transparent pourvu d'une structure anti-éblouissement (17) ou pourvu d'un diffuseur est disposé dans la première direction d'émission, derrière le guide de lumière (3) présentant une forme de panneau.

12. Luminaire (1) selon la revendication 10,
**caractérisé en ce**
**qu'**un panneau de terminaison (18) plan et transparent est disposé dans la première direction d'émission, derrière le panneau (12) transparent pourvu d'une structure anti-éblouissement (17) ou pourvu d'un diffuseur.

13. Luminaire (1) selon l'une quelconque des revendications précédentes,
**caractérisé en ce**
**que** le guide de lumière (3) présentant une forme de panneau est maintenu par au moins deux éléments de support (20) opposés, sachant que les diodes électroluminescentes (2) et les douilles pour les deuxièmes moyens d'éclairage (7) sont disposées dans lesdits éléments de support (20).
